# FASCICULE DE BREVET EUROPEEN

(11) **EP 3 010 852 B1**
(45) Date de publication et mention de la délivrance du brevet: **06.03.2019**
(21) Numéro de dépôt: 14739061.1
(22) Date de dépôt: 18.06.2014
(51) Int. Cl.: C01B 19/02

(54) **PROCEDE DE PREPARATION DE NANOPARTICULES DE SELENIUM ELEMENTAIRE**
VERFAHREN ZUR HERSTELLUNG VON NANOPARTIKELN ELEMENTAREN SELENS
PROCESS FOR PREPARING ELEMENTAL SELENIUM NANOPARTICLES

(30) Priorité: 19.06.2013 EP 13003121; 04.11.2013 FR 1302552
(43) Date de publication de la demande: 27.04.2016
(73) Titulaire: Pancosma S.A., 1218 Le Grand-Saconnex (CH)
(72) Inventeur: BRAVO, David, 1400 Yverdon-les-Bains (CH); MARKUS, Lenz, 4057 Basel (CH)
(74) Mandataire: Stona, Daniel
(86) Numéro de dépôt international: PCT/EP2014/062865
(87) Numéro de publication internationale: WO 2014/202686

(56) Documents cités:
- WO-A2-2009/010922
- GB-A- 1 574 194
- US-B1- 6 398 125
- LING KONG ET AL: "The suppression of prostate LNCaP cancer cells growth by Selenium nanoparticles through Akt/Mdm2/AR controlled apoptosis", BIOMATERIALS, ELSEVIER SCIENCE PUBLISHERS BV., BARKING, GB, vol. 32, no. 27, 10 mai 2011 (2011-05-10), pages 6515-6522, XP028254240, ISSN: 0142-9612, DOI: 10.1016/J.BIOMATERIALS.2011.05.032 [extrait le 2011-05-16]

## Description

L'invention concerne la préparation de nanoparticules de sélénium élémentaire, en particulier, d'un produit contenant des nanoparticules de sélénium.

### Arrière-plan de l'invention

Les demandes de brevet étasunien publiées sous les numéros US 2012/0202062 et US 2012/0207846 décrivent la production de nanoparticules de sélénium élémentaire stable amorphe. Elles sont préparées par réaction d'une source de sélénium avec un agent réducteur ou oxydant dans un milieu liquide à une température comprise entre 0 et 100°C et en présence d'une macromolécule.

Il est écrit aux paragraphes [0047] de ces demandes précitées que le produit de la réaction, qui peut être effectuée en milieu liquide, est une poudre de nanoparticules qui peut être isolée par un simple retrait de l'eau du milieu réactionnel. Ceci peut être réalisé par évaporation, filtration ou tout moyen évident pour l'homme de l'art.

La demande GB 1 574 194 A concerne la préparation d'une poudre sèche et purifiée de sélénium. Dans ce procédé, on sèche par atomisation une boue aqueuse de granules de sélénium obtenue par refroidissement de sélénium fondu dans de l'eau.

Dans le procédé décrit dans le brevet étasunien publié sous le numéro US 6 398 125 B1, on pulvérise du sélénium fondu par deux étapes consécutives d'atomisation, formant ainsi des gouttelettes fines de sélénium liquide suspendues dans un fluide d'atomisation. Les gouttelettes sont solidifiées par refroidissement.

L'article de Ling Kong et al ("The suppression of prostate LNCaP cancer cells growth by Selenium nanoparticles through Akt/ Mdm2/AR controlled apoptosis", Biomaterials 32 (2011), pages 6515-6522) divulgue un procédé de préparation d'une suspension de nanoparticules de sélénium à partir d'une solution comprenant du sélénite de sodium et du glutathion par adaptation du pH de la solution à une valeur de 7.1 en ajoutant de l'hydroxyde de sodium.

### Exposé sommaire de l'invention

Le but majeur de l'invention est de proposer des améliorations tant des produits que des procédés décrits dans les demandes de brevet précités.

Les inventeurs ont découvert avec surprise que le séchage des nanoparticules pouvait ne pas être qu'un simple retrait d'eau mais pouvait, dans certaines conditions, contribuer significativement à augmenter le rendement en nanoparticules. Etudiant ce phénomène imprévu, ils ont constaté qu'il pouvait se produire une réduction du sélénite de sodium résiduel au cours du séchage, ce qui conduit en fait à augmenter la quantité de nanoparticules de sélénium élémentaire produites.

En effet, pour un homme du métier (chimiste ou technologue), la mise en oeuvre d'un séchage par atomisation ne peut pas contribuer à la réduction du sélénite de sodium en sélénium élémentaire. L'atomisation à chaud consiste en un retrait rapide de l'eau d'un échantillon liquide pour le transformer en poudre. Il n'y a normalement pas de réaction chimique car l'atomisation est une organisation physique des microparticules constituant la poudre. Il n'est donc en principe pas possible qu'un tel procédé contribue à la réduction du sélénite de sodium. Un tel résultat était par conséquent tout à fait imprévisible.

L'invention met ainsi à profit cette découverte inespérée, en proposant un procédé de préparation d'une poudre contenant des nanoparticules de sélénium tel que défini par la revendication 1.

Enfin, on propose aussi un procédé d'enrichissement d'un produit contenant des nanoparticules de sélénium, grâce à une étape de séchage par atomisation.

D'autres caractéristiques et avantages de l'invention vont maintenant être décrits en détail dans l'exposé suivant qui est donné en référence aux figures annexées, lesquelles représentent schématiquement :
- figures 1 à 2 : des nanoparticules de sélénium élémentaire dans un échantillon de poudre du produit obtenu à partir de protéine de soja ; et
- figure 3 : des nanoparticules de sélénium élémentaire dans un échantillon de poudre du produit obtenu à partir de glycine.

### Exposé détaillé de l'invention

Selon le procédé de l'invention, un produit contenant des nanoparticules de sélénium est obtenu à partir :
- d'au moins un composé organique et
- d'au moins une source de sélénium,
en mettant en oeuvre une étape de séchage par atomisation.

Le composé organique peut être de nature très variée. Il peut s'agir par exemple d'une source de fibres.

En particulier, ce peut être un composé aminé.

Selon un mode de réalisation préféré de l'invention, le produit contenant des nanoparticules de sélénium est obtenu essentiellement à partir:
- d'au moins un composé réducteur, tel qu'un composé aminé,
- d'au moins une source de sélénium et
- éventuellement d'au moins un modificateur de pH.

Les nanoparticules ont une dimension supérieure à 300 nm et de préférence d'au plus 600 nm.

Selon un autre mode de réalisation préféré de l'invention, le produit contenant des nanoparticules de sélénium est obtenu essentiellement à partir:
- d'au moins un composé réducteur, tel qu'un composé aminé, à l'exception des macromolécules,
- d'au moins une source de sélénium et
- éventuellement d'au moins un modificateur de pH.

Dans ce mode de réalisation, le composé aminé est de préférence un composé à chaîne relativement courte, c'est-à-dire qu'il ne s'agit en principe pas d'une macromolécule. Toutefois, il peut s'agir d'une macromolécule dégradée, par exemple une protéine comme une protéine de soja, de plasma, de lait ou d'oeuf, ayant subi une digestion à l'aide d'une enzyme, telle qu'une protéase.

Quel que soit le mode de réalisation, le composé aminé peut également être un acide aminé, en particulier la glycine.

Comme source de sélénium, on peut citer toute source de sélénium appropriée, dès lors qu'elle réagit avec la matière organique durant la préparation. On utilise de préférence le sélénite de sodium (Na₂SeO₃) ou le sélénate de sodium (Na₂SeO₄).

Dans certaines conditions, notamment lorsque la source de sélénium est très acide, on peut se passer de modificateur de pH.

Lorsqu'un modificateur de pH est nécessaire, ce peut être tout produit pouvant augmenter ou diminuer le pH. Pour augmenter le pH, on peut donc utiliser une base de Bronsted, en particulier l'hydroxyde de sodium.

Pour diminuer le pH, on peut mettre en oeuvre un acide de Bronsted tel que l'acide phosphorique.

On pourrait éventuellement utiliser une poly-base ou un polyacide, si les conditions préparatoires et de la finalité du produit s'y prêtent.

Le produit obtenu selon le procédé de l'invention contient généralement des nanoparticules de sélénium ayant une taille pouvant aller de 1 à 1000 nm, en particulier de 100 à 600 nm.

Le procédé selon l'invention de préparation d'un produit contenant des nanoparticules de sélénium a la particularité de comporter une étape de séchage par atomisation.

Les inventeurs ont en effet constaté que l'atomisation, et en particulier l'atomisation à haute température, peut s'accompagner d'une décomposition thermique qui est une réaction oxydante au cours de laquelle le composé aminé se décompose et perd des électrons. Ce phénomène se déroulant dans un environnement clos et saturé (c'est-à-dire normalement dans une tour d'atomisation), il semblerait que les électrons libérés soient captés par le sélénite de sodium résiduel (car non réduit par la réaction en milieu liquide), ce qui provoquerait l'apparition de nanoparticules de sélénium élémentaire supplémentaires conduisant à une amélioration du rendement global.

Le procédé selon l'invention peut s'appliquer à tout produit contenant déjà des nanoparticules de sélénium. Il peut donc servir à raffiner, c'est-à-dire, enrichir, n'importe quel produit contenant des nanoparticules de sélénium, en particulier le produit décrit dans les demandes de brevet étasuniennes précitées.

Selon un mode de réalisation de l'invention, le procédé selon l'invention comporte les étapes suivantes :
a) on réalise une solution ou suspension du ou des composé(s) aminé(s),
b) on ajoute, sous agitation, au moins un modificateur de pH,
c) on ajoute, sous agitation, au moins une source de sélénium, et
d) on soumet l'ensemble à un séchage par atomisation.

Bien entendu, les étapes a) à c) peuvent être dans un ordre différent.

Le séchage par atomisation est généralement effectué à une température supérieure à 100°C, de préférence d'au moins 120°C, plus préférentiellement d'au moins 160°C, en particulier d'au moins 180°C et tout spécialement d'au moins 200°C.

### Exemples

### Préalable sur les méthodes d'analyse : sélénium total, espèces de sélénium, nanoparticules

L'analyse se déroule en 3 étapes. Les échantillons de produit à analyser sont dissous dans de l'eau régale (« aqua regia »).

Au cours d'une première étape, on détermine le contenu en sélénium total des échantillons grâce à la spectrométrie ICP-MS (« Inductively Coupled Plasma Mass Spectrometry »).

Au cours d'une deuxième étape révèle l'espèce du sélénium en couplant en ligne une chromatographie ionique avec l'ICP-MS ; la comparaison des temps de rétention avec des standards connus donne l'espèce du sélénium dans l'échantillon et permet de calculer la fraction de chaque espèce en proportion du contenu total de sélénium.

Enfin, au cours d'une troisième étape, on investigue la structure du sélénium grâce à la microscopie électronique à balayage (SEM pour « Scanning Electron Microscopy en anglais ») et la microscopie NanoSight qui permet d'analyser et de visualiser des nanoparticules entre 10 et 1000 nm. En préalable à l'analyse, les échantillons sont centrifugés avec du poly-tungstate de sodium dont la densité est 3 g/cm³, ce qui permet de retirer les matrices indésirables. Pour l'analyse SEM, les images par "secondary electrons" visualisent la morphologie des particules contenant le sélénium et leur topographie de surface. Un détecteur d'électrons rétrodiffusés détermine la composition de ces particules. Enfin, le microscope « NanoSight » utilise la lumière laser diffractée et le mouvement brownien des particules afin d'analyser leur taille et leur distribution.

### Description du procédé mis en oeuvre

Ce procédé se décompose en deux étapes successives : la préparation d'une phase liquide et son atomisation.

### 1) Utilisation de protéine de soja

Toute la préparation se déroule sous agitation. Un mélangeur est rempli avec 1 428 l d'eau. Les brasseurs du mélangeur sont mis en marche. Une masse de 420 kg de protéine de soja est ajoutée. Le produit est transféré dans des cuves de procédé. Ces opérations sont répétées deux fois par cuve. Les cuves du procédé sont mises à chauffer à 70°C. Une masse de 16,74 kg d'enzyme (protéase) est versée dans la cuve. Lorsque la température atteint 70°C, on laisse le mélange agir pendant 5 heures. La température est alors augmentée à 90°C. Lorsque la température atteint 85°C, 35 kg de soude caustique sont ajoutés et la solution est mélangée pendant 1 minute. Lorsque la température atteint 88°C, une masse de 22,73 kg de sélénite de sodium 45% est ajoutée à la solution, puis celle-ci est agitée pendant 1 minute. Ensuite, le mélange est maintenu au repos, sans agitation, pendant 10 minutes. Lorsque la température atteint 90°C, 17 kg de soude caustique sont ajoutés à la solution et celle-ci est agitée pendant 1 minute. On laisse ensuite le mélange agir pendant environ 15 minutes et jusqu'à l'apparition de la couleur orange foncé désirée. Dès que cette couleur est obtenue, le chauffage est arrêté. Le contenu de la cuve est rapidement transféré dans un réservoir de stockage pour atomisation. Une masse de 500 l d'eau est ajoutée. Trois heures après, 150 l d'eau sont ajoutés dans la cuve de stockage.

### 2) Utilisation de glycine

La préparation suivante est une alternative de la préparation précédente dans laquelle la glycine remplace la protéine de soja et le pH est diminué. Il pourrait aussi être augmenté par ajout de soude caustique, de même que dans la préparation précédente, le pH pourrait également être diminué.

Une première cuve est remplie avec 325 l d'eau. Sous agitation, une masse de 100 kg de glycine est versée dans le mélangeur. Le système d'agitation de la cuve du procédé est mis en marche. Le produit est transféré de la première cuve vers la cuve du procédé. Le chauffage de la cuve est mis en marche avec un objectif de température de 55°C. Une masse de 0,75 l d'acide phosphorique est ajoutée. La température augmente progressivement à 55°C et le pH se stabilise progressivement. La température des cuves du procédé est augmentée à 88°C. La température augmente progressivement. Lorsqu'elle atteint 88°C, une masse de 2,28 kg de sélénite de sodium est versée. Le système de chauffage est coupé. Éventuellement, 1,84 kg de lécithine de soja sont ajoutés. La cuve est raccordée à la pompe de la tour d'atomisation. Le séchage par atomisation peut débuter.

### Atomisation

La température choisie pour l'atomisation des phases liquides obtenues comme indiqué ci-dessus a été d'environ 220°C.

### Résultats

### Réduction du sélénite en nanoparticules de sélénium élémentaire durant la phase liquide et de la phase solide

### a) Produit obtenu à partir de protéine de soja

Le mode opératoire décrit ci-dessus a été mis en oeuvre et des échantillons de liquides correspondant aux différentes étapes ainsi qu'un échange de la poudre obtenue après séchage par atomisation ont été prélevés.

Afin de quantifier l'intensité de la couleur rouge de la poudre, une classification subjective a été retenue dans laquelle 0 représente un échantillon n'apparaissant pas rouge et 10 un échantillon totalement rouge. Les valeurs intermédiaires de 0 à 10 indiquent une intensité croissante de la couleur rouge.

Le tableau 1 suivant indique la teneur en sélénium nano-élémentaire (en pourcentage du sélénium total) des échantillons de liquide avant atomisation ainsi que l'intensité de la couleur rouge.

| **TABLEAU 1 : avant atomisation** | | |
|---|---|---|
| **Description de l'échantillon** | **% sélénium nano-élémentaire (% sélénium total)** | **Intensité du rouge** |
| Avant l'ajout de sélénite | 0% | 0 |
| Après la 1^{ère} addition de soude caustique | 0% | 0 |
| Après l'ajout de sélénite de sodium | 49% | 5 |
| Après la 2^{ème} addition de soude caustique | 36% | 4 |
| Après arrêt du système de chauffage | 30% | 4 |
| Après arrêt du système de chauffage | 33% | 4 |
| Après refroidissement | 40% | 5 |
| Valeur moyenne après ajout du sélénite de sodium | 38% | |

On voit qu'une moyenne de 38% du sélénite a été réduite en sélénium élémentaire.

Le tableau 2 suivant indique la teneur en sélénium nano-élémentaire (en pourcentage du sélénium total) des échantillons de poudre après atomisation ainsi que l'intensité de la couleur rouge.

| **TABLEAU 2 : après atomisation** | | |
|---|---|---|
| **Échantillon de poudre** | **% sélénium nano-élémentaire (% sélénium total)** | **Intensité du rouge** |
| 1 | 65,1 | 8 |
| 2 | 63,1 | 8 |
| 3 | 62,2 | 8 |
| 4 | 62,5 | 8 |
| 5 | 62,5 | 8 |
| Moyenne (écart-type) | 63,1 (1,12) | |

L'analyse indique donc que plus de 60% du sélénium est réduit en sélénium élémentaire dans ces échantillons. Cela démontre que l'atomisation ne consiste pas seulement à retirer l'eau de l'échantillon mais permet un raffinement du produit et son amélioration significative en contribuant à une réduction supplémentaire de sélénite de sodium. Cela permet de mieux tirer parti du procédé en utilisant du sélénite de sodium qui n'avait pas réagi lors de la phase liquide.

Ainsi, il apparaît clairement que le séchage par atomisation du liquide contenant les nanoparticules de sélénium élémentaire n'a pas pour seul effet d'éliminer l'eau. L'atomisation permet la réduction supplémentaire du sélénite en sélénium élémentaire et donc l'amélioration notable et le raffinement du produit. Elle permet ainsi une augmentation de plus de 20% du sélénium élémentaire dans le produit, conduisant à une teneur de plus de 63%.

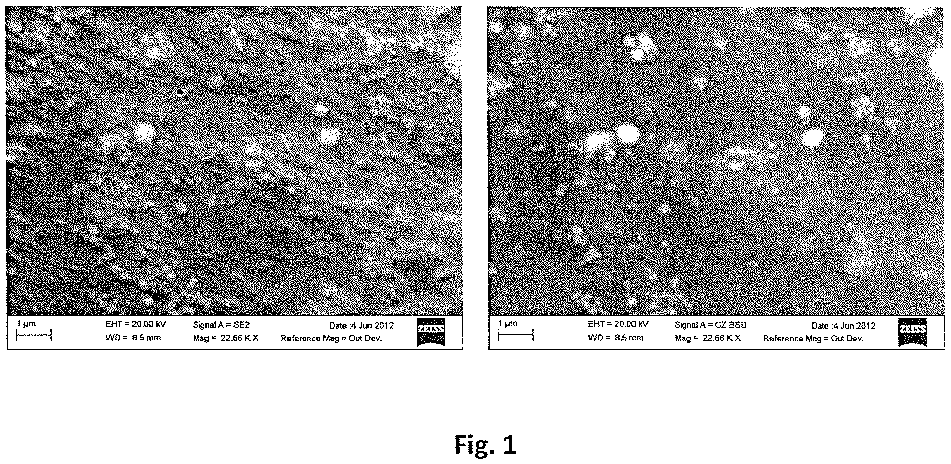

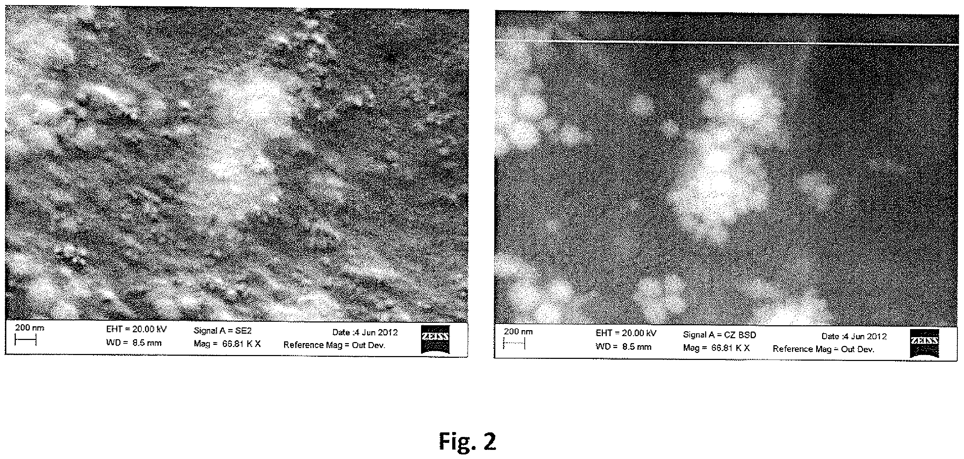

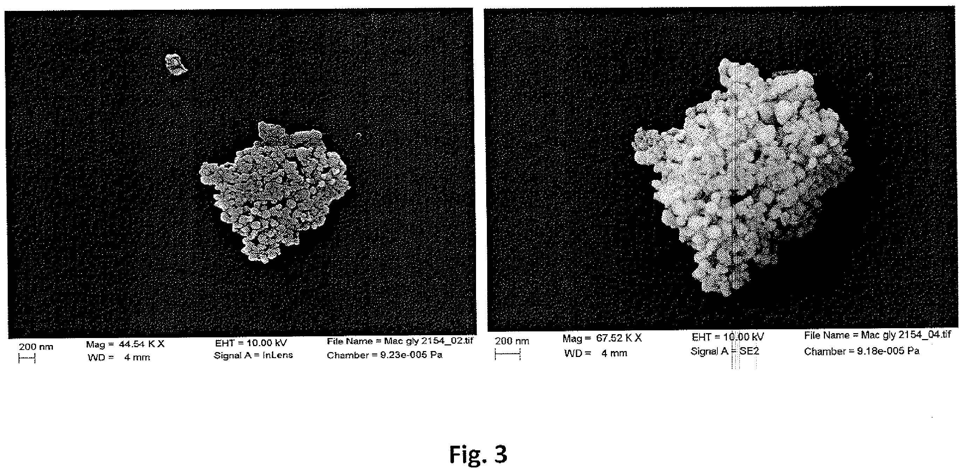

Les figures 1 et 2 représentent des nanoparticules de sélénium élémentaire dans un échantillon de poudre du produit obtenu à partir de protéine de soja. Sur la figure 1, l'échelle est de 1 µm et sur les figures 2 et 3, l'échelle est de 200 nm.

### b) Produit obtenu à partir de glycine

La glycine a été retenue pour plusieurs raisons. D'une part, elle n'est pas décrite comme un acide aminé réducteur ; dès lors, sa mise en contact avec le sélénite de sodium lors de la préparation de la phase liquide du procédé ne devrait pas permettre l'apparition de sélénium élémentaire. D'autre part, la température de décomposition thermique de la glycine est relativement basse.

Il semblerait que lors de l'atomisation, une partie de la glycine se décompose thermiquement, ce qui libère des électrons et contribue à la réduction du sélénite de sodium.

La solution obtenue lors de la phase liquide du procédé est blanche transparente. Ceci suggère qu'aucune réaction de réduction ne s'est déroulée au cours de cette phase. Ceci est cohérent avec le fait que la glycine n'est pas un acide aminé réducteur. L'absence de sélénium élémentaire dans les échantillons liquides est confirmée par les analyses chimiques détaillées dans le tableau 3 suivant, qui indique la teneur en sélénium nano-élémentaire (en pourcentage du sélénium total) des échantillons de liquide avant atomisation.

| **TABLEAU 3 : avant atomisation** | | |
|---|---|---|
| **Description de l'échantillon** | **% sélénium nano- élémentaire (% sélénium total)** | **Intensité du rouge** |
| Avant l'ajout de sélénite - avant ajout d'acide | 0% | 0 |
| Avant l'ajout de sélénite - après ajout d'acide | 0% | 0 |
| Après l'ajout de sélénite - échantillon 1 | 15% | 0 |
| Après l'ajout de sélénite - échantillon 2 | 14% | 0 |
| Après arrêt du système de chauffage | 11% | 0 |
| Après arrêt du système de chauffage | 13% | 0 |
| Après refroidissement | 10% | 0 |
| Valeur moyenne après ajout du sélénite de sodium | 13% | |

Le liquide a ensuite été séché en suivant le protocole de fabrication décrit pour le produit à base de protéine de soja. Lorsque la poudre sort de la tour d'atomisation, elle est parfaitement rouge, ce qui suggère qu'une partie significative du sélénite de sodium a été réduite en sélénium élémentaire lors du séchage.

Comme l'indique le tableau 4 suivant, les analyses chimiques confirment que plus de 60% du sélénium des échantillons après séchage se présente sous la forme de sélénium nano-élémentaire.

| **TABLEAU 4 : après atomisation** | | |
|---|---|---|
| **Échantillon de poudre** | **% sélénium nano élémentaire (% sélénium total)** | **Intensité du rouge** |
| 1 | 66,9 | 8 |
| 2 | 66,4 | 8 |
| 3 | 58,0 | 8 |
| 4 | 63,3 | 8 |
| 5 | 62,9 | 8 |
| Moyenne (écart-type) | 63,5 (3,6) | |

Cela démontre de façon évidente que le séchage d'un échantillon contenant du sélénite de sodium et de la matière organique n'est pas qu'une simple élimination de l'eau. Effet, même à partir d'un liquide totalement dépourvu de sélénium élémentaire, le séchage contribue à la réduction de près de 50% du sélénite de sodium.

Les nanoparticules de sélénium élémentaire sont représentées sur la figure 3.

Il est à noter que dans cet exemple le séchage permet à lui seul de réduire une proportion de sélénite voisine de celle décrite par les demandes de brevet précitées sur la seule base de la réaction en milieu liquide. Cela souligne à nouveau le raffinement permis par le séchage.

### Essais à d'autres températures d'atomisation

La même étude a été reproduite avec un procédé de séchage par atomisation utilisant une température plus basse. Plusieurs essais ont été conduits avec des températures de séchage différentes : 120°C ou 160-180°C ou 190-200°C.

De nouveau, le liquide avant atomisation était toujours blanc transparent confirmant que la glycine ne réduit pratiquement pas le sélénite de sodium du fait de son absence de capacité réductrice.

Le tableau 5 suivant indique la teneur en sélénium nano-élémentaire (en pourcentage du sélénium total) des échantillons de liquide avant atomisation et l'intensité de la couleur rouge.

| **TABLEAU 5 : avant atomisation** | | |
|---|---|---|
| **Description de l'échantillon** | **% sélénium nano- élémentaire (% sélénium total)** | **Intensité du rouge** |
| Avant l'ajout de sélénite - avant ajout de l'acide | 0% | 0 |
| Avant l'ajout de sélénite - après ajout de l'acide | 0% | 0 |
| Après l'ajout de sélénite | 5% | 0 |

Après atomisation, la couleur de l'échantillon a évolué graduellement du blanc au rouge (190-200°C) en passant par le rose pâle (pour 120°C), ce qui suggère que le sélénite de sodium était progressivement réduit par l'augmentation de la température. Cela a été confirmé par l'analyse chimique qui montre que la proportion de sélénium élémentaire sous forme nano-particulaire progresse de 43% à 120°C, à 47% à 180°C et 48% à 200°C.

Le tableau 6 suivant indique la teneur en sélénium nano élémentaire (en pourcentage du sélénium total) des échantillons de poudre après atomisation en fonction de la température d'atomisation ainsi que l'intensité de la couleur rouge.

| **TABLEAU 6 : après atomisation** | | |
|---|---|---|
| **Température d'atomisation** | **% sélénium nano- élémentaire (% sélénium total)** | **Intensité du rouge** |
| 120°C | 43,5 | 3 |
| 180°C | 47,2 | 5 |
| 200°C | 48,0 | 5 |

Ces essais démontrent que, de manière surprenante, le séchage par atomisation contribue très significativement à la réduction du sélénite de sodium en sélénium élémentaire et permet le raffinement d'un produit contenant des nanoparticules de sélénium élémentaire.

### Essai avec de la glycine et à une teneur en sélénium supérieure

Les études précédentes ont toutes été conduites avec une teneur en sélénium de 1%. Afin de déterminer si la teneur en sélénium totale du produit peut influencer le comportement du sélénium. En particulier, la question de la présente étude consistait à déterminer si une teneur en sélénium supérieure à 1% pouvait influencer la proportion de sélénium réduite lors de la phase liquide, ou lors du séchage.

### Description du procédé mis en oeuvre

Une cuve est remplie avec 924,47 l d'eau. Le chauffage de la cuve est mis en marche. Lorsque la température atteint 60°C, Sous agitation, une masse de 275 kg de glycine est versée dans le mélangeur. La température est augmentée à 90°C. L'agitation est maintenue pendant 3 minutes puis elle est arrêtée. Une masse de 4,57 kg d'acide phosphorique est ajoutée. La température augmente progressivement à 90°C. Lorsqu'elle atteint 90°C, une masse de 20,34 kg de sélénite de sodium est versée. Le système de chauffage est coupé. L'agitation est maintenue durant 1 minute puis arrêtée. La cuve est raccordée à la pompe de la tour d'atomisation. Le séchage par atomisation peut débuter.

La température choisie pour l'atomisation des phases liquides obtenues comme indiqué ci-dessus a été d'environ 220°C.

### Résultats

Le mode opératoire décrit ci-dessus a été mis en oeuvre et des échantillons de liquides avant sprayage ainsi que deux échantillons de poudre obtenue après séchage par atomisation ont été prélevés. Un échantillon de poudre a été prélevé au début de la fabrication et le second à la fin de la fabrication.

Comme dans les exemples précédents, afin de quantifier l'intensité de la couleur rouge de la poudre, une classification subjective a été retenue dans laquelle 0 représente un échantillon n'apparaissant pas rouge et 10 un échantillon totalement rouge. Les valeurs intermédiaires de 0 à 10 indiquent une intensité croissante de la couleur rouge.

Le tableau 7 suivant indique la teneur en sélénium nano-élémentaire (en pourcentage du sélénium total) des échantillons de liquide avant ou après atomisation ainsi que l'intensité de la couleur rouge.

| **TABLEAU 7 : avant et après atomisation** | | |
|---|---|---|
| **Description de l'échantillon** | **% sélénium nano- élémentaire (% sélénium total)** | **Intensité du rouge** |
| Avant sprayage | 9% | 0 |
| Après sprayage Au début de la fabrication | 71% | 10 |
| Après sprayage À la fin de la fabrication | 69% | 10 |

Avant atomisation, la solution est transparente ce qui suggère la quasi absence de réduction dans la phase liquide confirmant que la glycine ne réduit pratiquement pas le sélénite de sodium du fait de son absence de capacité réductrice. Cela est confirmé par les analyses qui ne trouvent que 9% de sélénium élémentaire en rapport à la teneur totale en sélénium. Cela confirme les exemples précédents mais avec une teneur en sélénium très nettement supérieure et augmentée à 3%.

Après atomisation, les échantillons sont des poudres très rouges. Il n'y a pas de différence visuelle de couleur rouge entre les échantillons prélevés au début ou à la fin de la fabrication. Cela a été confirmé par l'analyse chimique qui montre que la proportion de sélénium élémentaire sous forme nano-particulaire est d'environ 70% de la teneur totale en sélénium.

Le produit à base de glycine contient 3,05% de sélénium total dont environ 2,17% de sélénium nano élémentaire, pour la grande majorité obtenu lors de l'atomisation.

Ce dernier exemple confirme que, de manière surprenante, le séchage par atomisation contribue très significativement à la réduction du sélénite de sodium en sélénium élémentaire et permet en outre le raffinement d'un produit contenant des nanoparticules de sélénium élémentaire. Il est complémentaire des exemples précédents car il démontre que l'obtention lors de l'atomisation peut être obtenue même à une teneur très nettement supérieure de sélénium.

## Revendications

1. Procédé de préparation d'une poudre contenant des nanoparticules de sélénium, dans lequel on part :
- d'au moins un composé organique et
- d'au moins une source de sélénium,
et on en met en oeuvre une étape de séchage par atomisation.

2. Procédé de préparation selon la revendication 1, comportant les étapes suivantes :
a) on réalise une solution ou suspension d'au moins un composé(s) réducteur(s),
b) on ajoute éventuellement, sous agitation, au moins un modificateur de pH,
c) on ajoute, sous agitation, au moins une source de sélénium, et
d) on soumet l'ensemble à un séchage par atomisation.

3. Procédé selon la revendication 2, dans lequel l'étape a) comprend la digestion d'une macromolécule par une enzyme.

4. Procédé selon l'une des revendications 2 et 3, dans lequel le ou les modificateur(s) de pH est/sont une/des base (s) .

5. Procédé selon la revendication 4, dans lequel le modificateur de pH comprend de l'hydroxyde de sodium.

6. Procédé selon l'une des revendications 1 à 3, dans lequel le ou les modificateur(s) de pH est/sont une/des acide(s).

7. Procédé selon la revendication 6, dans lequel le modificateur de pH comprend de l'acide phosphorique.

8. Procédé selon l'une des revendications 1 à 7, dans lequel la source de sélénium comprend du sélénite de sodium.

9. Procédé selon l'une des revendications 1 à 8, dans lequel le séchage par atomisation est effectué à une température supérieure à 100°C, de préférence d'au moins 120°C, plus préférentiellement encore d'au moins 160°C.

## Patentansprüche

1. Verfahren zur Herstellung eines Pulvers, das Selen-Nanopartikel enthält, bei dem verwendet wird:
- mindestens eine organische Verbindung und
- mindestens einer Selenquelle,
und ein Sprühtrocknungsschritt durchgeführt wird.

2. Verfahren zur Herstellung nach Anspruch 1, umfassend die folgenden Schritte:
a) Bilden einer Lösung oder Suspension wenigstens einer reduzierenden Verbindungen),
b) gegebenenfalls Zusetzen, unter Rühren, wenigstens eines pH-Modifizierungsmittels,
c) Zusetzen, unter Rühren, mindestens einer Selenquelle und
d) Unterziehen des Gesamten einer Sprühtrocknung.

3. Verfahren nach Anspruch 2, in dem Schritt a) eine Verdauung eines Makromoleküls durch ein Enzym umfasst.

4. Verfahren nach einem der Ansprüche 2 und 3, in dem das/die pH-Modifizierungsmittel eine Base ist / Basen sind.

5. Verfahren nach Anspruch 4, in dem das pH- Modifizierungsmittel Natriumhydroxid umfasst.

6. Verfahren nach einem der Ansprüche 1 bis 3, worin das/die pH- Modifizierungsmittel eine Säure ist / Säuren sind.

7. Verfahren nach Anspruch 6, In dem das pH- Modifizierungsmittel Phosphorsäure umfasst.

8. Verfahren nach einem der Ansprüche 1 bis 7, in dem die Selenquelle Natriumselenit umfasst.

9. Verfahren nach einem der Ansprüche 1 bis 8, in dem die Sprühtrocknung bei einer Temperatur über 100°C, vorzugsweise bei mindestens 120°C, besonders bevorzugt bei mindestens 160°C durchgeführt wird.

## Claims

1. Process for preparing a powder containing selenium nanoparticles by starting with:
- at least one organic compound and
- at least one source of selenium,
and implementing a spray drying step.

2. Process of preparation according to claim 1, comprising the following steps:
a) producing a solution or suspension of at least one reducing compound,
b) optionally adding, with stirring, at least one pH modifier,
c) adding, with stirring, at least one source of selenium, and
d) subjecting the resulting mixture to spray drying.

3. Process according to claim 2, in which step a) comprises the digestion of a macromolecule by an enzyme.

4. Process according to one of claims 2 and 3, in which the pH modifier(s) is/are a base or bases.

5. Process according to claim 4, in which the pH modifier comprises sodium hydroxide.

6. Process according to one of claims 1 to 3, in which the pH modifier(s) is/are an acid or acids.

7. Process according to claim 6, in which the pH modifier comprises phosphoric acid.

8. Process according to one of claims 1 to 7, in which the source of selenium comprises sodium selenite.

9. Process according to one of claims 1 to 8, in which the spray drying is performed at a temperature of more than 100 °C, preferably at least 120 °C and even more preferably at least 160 °C.
